# EUROPÄISCHE PATENTSCHRIFT

(11) **EP 1 339 558 B1**
(45) Veröffentlichungstag und Bekanntmachung des Hinweises auf die Patenterteilung: **25.02.2009**
(21) Anmeldenummer: 01994768.8
(22) Anmeldetag: 06.12.2001
(51) Int. Cl.: B60J 5/04

(54) **GEKRÜMMTE FAHRZEUGTÜR**
CURVED VEHICLE DOOR
PORTIERE DE VEHICULE COURBE

(30) Priorität: 06.12.2000 DE 10060632
(43) Veröffentlichungstag der Anmeldung: 03.09.2003
(73) Patentinhaber: Fellner, Gerd, 85757 Karlsfeld (DE)
(72) Erfinder: Fellner, Gerd, 85757 Karlsfeld (DE)
(74) Vertreter: Pätzold, Herbert
(86) Internationale Anmeldenummer: PCT/EP2001/014346
(87) Internationale Veröffentlichungsnummer: WO 2002/045987

(56) Entgegenhaltungen:
- EP-A- 0 940 297
- WO-A-00/15454
- DE-A- 4 237 584
- DE-A- 19 801 842
- US-A- 5 536 060
- US-A- 6 038 911

## Beschreibung

Die Erfindung betrifft eine gekrümmt ausgebildete Fahrzeugtür, nach den Merkmalen des Oberbegriffs des Anspruches

Eine entsprechende Fahrzeugtüre ist durch die Deutsche Patentanmeldung DE 41 39 192 A1 bekannt.

Eine ähnliche Fahrzeugtür ist durch die U.S. Patentschrift 5536060 bekannt.

Das den Funktionsträger einer PKW-oder LKW-Tür bildende zentrale Tragelement besteht beim Stand der Technik aus einem tiefgezogenen stahlblech mit einer Materialstärke zwischen 0,8 und 1,2 mm. Das Stahlblech bildet zwar einen umlaufenden geschlossenen Rand, es müssen jedoch größere Durchbrechungen und Aussparungen in dem tragenden Stah blech für Montagearbeiten am Türschloß und zur Montage und Reparatur an der gekrümmten seitlichen Fensterscheibe sowie ihrer Fensterhebe- und -senkvorrichtung und sonstiger Anbauteilen der Tür vorhanden sein damit die Montage- und/oder Reparaturarbeiten in herkömmlicher Weise von der Fahrzeugtürinnenseite aus vorgenommen werden können. Diese notwendigen Durchbrechungen und Aussparungen in den bekannten Funktionsträgem von Fahrzeugtüren verringern die Stabilität der Tür im Crashfall und sind der Grund für relativ geringe Festigkeitswerte der Tür in allen Lastfällen. Darüber hinaus kommt es im Bereich der äußeren Türverkleidung aufgrund der großen Aussparungen leicht zum Eindringen von Wasser, was durch Dichtungsfolien nur unbefriedigend auf Dauer nicht ausreichend sicher verhindert werden kann. Außerdem bedingen die relativ großen Aussparungen an den Funktionsträgern aufwendige Befestigungen der Tür-Anbauteile, die relativ große Toleranzen bezüglich der Halterung der Türverkleidungen erforderlich machen. Die Montage von herkömmlichen Fahrzeugtüren ist dabei besonders aufwendig und zeitintensiv, da alle Zubehörteile am Fertigungsband von Hand montiert werden müssen und an dem Funktionsträger aus einem tragenden Stahlblech schwer zugänglich sind. Um der mangelnden Stabilität der Funktionsträger der herkömmlichen Fahrzeugtüren weitgehend entgegenwirken zu können, müssen besondere Verstärkungen vorgesehen sein, die aus der Ebene der Funktionsträger relativ weit hervorragen, wodurch die bekannten Fahrzeugtüren einen besonders sperrige Baukörper darstellen, die jeweils einen unbefriedigend großen Bauraum zwischen der Türaußenverkleidung bzw. der Außenhaut und dem Funktionsträger bedingen.

Diese relativ große Bauraum einer nach außen mehr oder weniger gekrümmten Fahrzeugtür mit ihrer besonders großen Bautiefe bzw. Stärke ist durch die Türkrümmung und der entsprechend gekrümmten Fensterseitenscheibe bedingt, die mit einer ungekrümmten Fensterhebe- und -senkvorrichtung in Verbindung steht, die beim Stand der Technik aus einem Scherengetriebe oder aus einer einen Seilzug aufweisenden Einrichtung besteht, wobei die bekannten Fensterhebe- und -senkvorrichtung motorbetrieben sein können. Dabei beanspruchen die bekannten Fensterhebe- und -senkvorrichtung aber innerhalb der gekrümmten Fahrzeugtüren jeweils notwedigerweise einen ungekrümmten Raumabschnitt in der Höhe des vollen Fensterschließ- und -öffnungsweges, wodurch vielfach eine Raumtiefe bis zu 60 mm beansprucht wird

Aufgabe der Erfindung ist es, eine gekrümmte Fahrzeugtür der eingangs genannten Art anzugeben, die die Nachteile der bekannten Fahrzeugtüren vermeidet und dabei den Insassen auch eine erhöhte Sicherheit im Crashfall oder bei militanten Überfällen bieten kann. Hierzu soll der Funktionsträger der Fahrzeugtür eine erheblich verbesserte Stabilität und Steifigkeit besitzen, die von Durchbrechungen und Aussparungen weitgehend verschont ist, so daß zusätzliche Verstärkungen am Funktionsträger nicht notwendig sind. Außerdem soll das Eindringen von Wasser in das Türinnere ohne aufwendige Vorkehrungen für Abdichtungen dauerhaft verhindert sein, und die Befestigung und Anbringung von Funktions- und Anbauteilen an dem Funktionsträger soll bei verringertem Zeitaufwand und bei gegenüber dem Stand der Technik wesentlich verkleinertem Bauraum entscheidend erleichtert sein, wobei ein ungekrümmter Raumabschnitt innerhalb der gekrümmten Tür zur Unterbringung einer Fensterhebe- uns -senkvorrichtung für die entsprechend gekrümmte Fensterseitenscheibe entfällt. Auch soll die Fahrzeugtür im wesentlichen vollrobotisch vormontierbar sein, so daß der fertige Funktionsträger der Fahrzeugtür samt Anbauteilen dem Montageband zugeführt werden kann.

Die Aufgabe wird erfindungsgemäß mit den kennzeichnenden Merkmalen des Anspruches 1 erfüllt. Vorteilhafte Ausführungen nach der Erfindung ergeben sich aus den Merkmalen der Unteransprüche und der nachfolgenden Beschreibung.

Der Erfindung liegt der Grundgedanke zugrunde, zur Erhöhung der Sicherheit der Fahrzeuginsassen und zur Erleichterung der Montage einen grundsätzlich neuen entsprechend gekrümmten Funktionsträger für die Fahrzeugtür aus Stahl- und/oder Aluminium und/oder Kunststoff anzugeben, der in wenigstens zwei parallelen gekrümmten Ebenen jeweils entlang paralleler gekrümmter Linien mit Versteifungen versehen ist. Dabei ist es besonders vorteilhaft, wenn Versteifungen in unmittelbar benachbart liegenden Ebenen Kreuzungspunkte bilden.

Der Erfindung liegt der weitere Gedanke zugrunde die notwendige Tiefe einer gekrümmten Fahrzeugtür gegenüber den bekannten gekrümmten Fahrzeugtüren dadurch wesentlich zu verkürzen, daß eine Fensterhebe- und -senkvorrichtung verwendet ist, die den Krümmungen der Fahrzeugtür mit dem gekerünnten seitlichen Fenster der Fahrzeugtür angepaßt ist.

Hierbei kann es besonders vorteilhaft sein, wenn die Versteifungen in den benachbart liegenden Funktionsträgerebenen in den Kreuzungspunkten Winkel von 90° bilden.

Die Versteifungen können mit Vorteil von Rippen-/Nutenprofilen oder dergleichen gebildet sein. Die Versteifungen längs paralleler Linien können auch aus Rippen-/Nutenprofilen bestehen, die in Abständen unterbrochen sind. Statt der Rippen-/Nutenprofile entlang gerader Linien können auch abwechselnd aufeinanderfolgende Buckel und Dellen geeignet sein. Bei Funktionsträgern aus Kunststoff können die Versteifungen entlang paralleler Linien in den benachbart liegenden Funktionsträgerebenen aus Fasersträngen, vorzugsweise Glasfasersträngen bestehen. Die parallelen Linien können gerade oder entlang einer Geraden wellenförmig verlaufen.

Ein auf dem vorstehenden Gedanken der Erfindung fußender weiterbildender Gedanke besteht darin, daß der entsprechend der Tür- und Fensterkrümmung gekrümmte Funktionsträger der Fahrzeugtür aus mindestens zwei flachen gekrümmten Schalenkörpern sandwichartig zusammengesetzt ist, wobei jeder Schalenkörper eine waschbrettartige gerippte Profilstruktur aufweist, die rechtwinklig zueinander verlaufen und die sich beiderseits an innenliegenden Kreuzungspunkten gegenseitig berühren und dabei Orte fester Verbindungen bilden, die zur Erzielung einer stabilen Einheit des aus mindestens zwei gekrümmten Schalenkörpern sandwichartig zusammengesetzten Funktionsträgers miteinander verschweißt, verklebt, genietet oder geclincht sein können. Bei zwei Schalenkörpern aus Metall können Punktverschweißungen an den Kreuzungspunkten besonders vorteilhaft sein, ohne daß die Erfindung auf eine solche Verbindungsart beschränkt ist.

Vorteilhafterweise bilden die Ränder des sandwichartig aneinanderliegenden Schalenkörpers gemeinsam einen in sich geschlossenen umlaufenden, gegen Eintritt von Wasser dichten Rahmen.

Dabei kann ein Funktionsträger nach der Erfindung aus gekrümmten Metallblechen oder Kunststoffplatten bestehen, wobei Teile der parallelen Versteifungen des außenliegenden Schalenkörpers als Führungen für die gekrümmte Fensterhebe- und -senkvorrichtung ausgebildet sind.

Wenn jedoch keine die Sicherheit im Crashfall besonders erhöhende Sandwichbauweise des gekrümmten Funktionsträgers notwendig ist, dann kann die gekrümmte Fensterhebe- und -senkvorrichtung auch außenseitig an einem gekrümmten einschaligen Funktionsträger gehalten werden, der mit einem Profil versehen ist, das teilweise zur Führung der gekrümmten Fensterhebe- und -senkvorrichtung dient.

Die Erfindung wird weiter anhand eines Ausführungsbeispieles näher beschrieben, das in einer Zeichnung, ohne jede Beschränkung, nur schematisch dargestellt ist. Hierin zeigt:
- Figur 1: einen aus zwei gekrümmten Schalenkörpern zusammensetzbarer Funktionsträger einer Fahrzeugtür nach der Erfindung;
- Figur 2: eine perspektivische Innenansicht des gekrümmten äußeren Schalenkörpers nach Fig. 1;
- Figur 3: eine perspektivische Außenansicht des gekrümmten äußeren Schalenkörpers nach Fig. 1;
- Figur 4: eine perspektivische Innenansicht des gekrümmten inneren Schalenkörpers nach Fig. 1;
- Figur 5: eine perspektivische Außenansicht des gekrümmten inneren Schalenkörpers nach Fig. 1;
- Figur 6: einen horizontalen Schritt durch den äußeren Schalenkörper;
- Figur 7: einen vertikalen Schnitt durch den inneren Schalenkörper,
- Figur 8: einen horizontalen Schnitt durch eine gekrümmte Fahrzeugtür nach der Erfindung mit einem entsprechend gekrümmten Seitenfenster;
- Figur 9: einen vertikalen Schnitt durch die Fahrzeugtür nach Fig. 8;
- Figur 10: einen vertikalen Schnitt durch eine Fensterhebe- und -senkvorrichtung;
- Figur 11: einen Abschnitt A aus Fig. 10 in vergrößerter Darstellung;
- Figur 12: einen Horizontalschnitt durch einen Abschnitt des zweischaligen Funktionsträgers nach Fig. 1 und
- Figur 13: eine Fensterhebe- und -senkvorrichtung nach Fig. 10 bis 12 in Verbindung mit einer gekrümmten Seitenscheibe der Fahrzeugtür nach der Erfindung

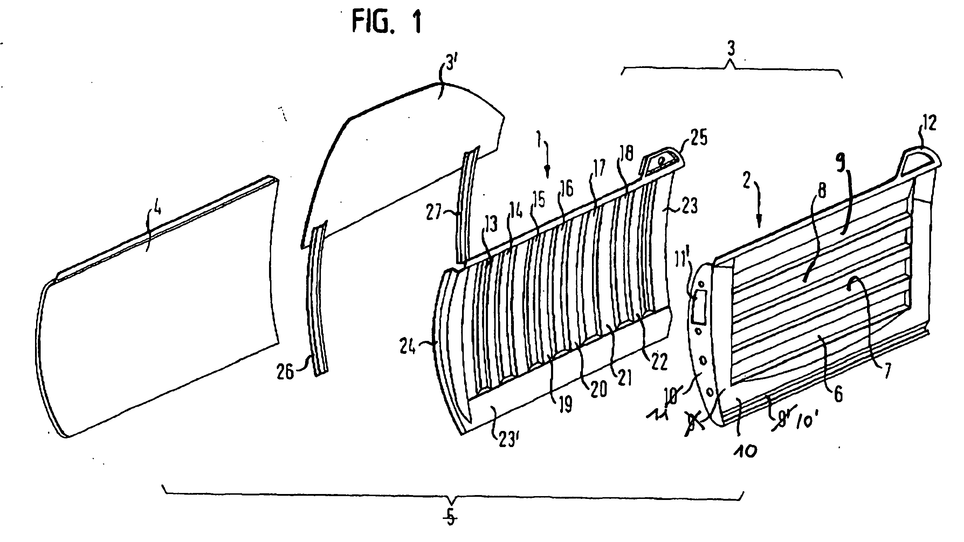

Figur 1 zeigt einen aus zwei einzelnen flachen gekrümmten Schalenkörpern 1 und 2 zusammensetzbaren Funktionsträger 3 sowie eine zugehörige entsprechend gekrümmte Fensterscheibe 3' und eine Türaußenverkleidung 4 jeweils in perspektivischer Darstellung, die gemeinsam eine gekrümmte erfindungsgemäße Fahrzeugtür 5, ohne ihre Innenverkleidung, beispielsweise für einen PKW, bilden.

Die beiden gekrümmten einzelnen Schalenkörper 1 und 2 bestehen beispielsweise jeweils aus Aluminium und/oder Stahlblech mit einer Stärke von jeweils etwa 0,4 mm bis 0,6 mm oder aus vorzugsweise glasfaserverstärktem Kunststoff, die sandwichartig zu dem Funktionsträgerkörper 3 mit einer Stärke von etwa 1 bis 2 mm miteinander verklebt sind.

Einer der beiden Schalenkörper 1 oder 2 kann aus einem faserverstärktem Kunststoff und der andere aus einem Alu- oder Stahlblech bestehen, die sandwichartig miteinander fest verbunden sind.

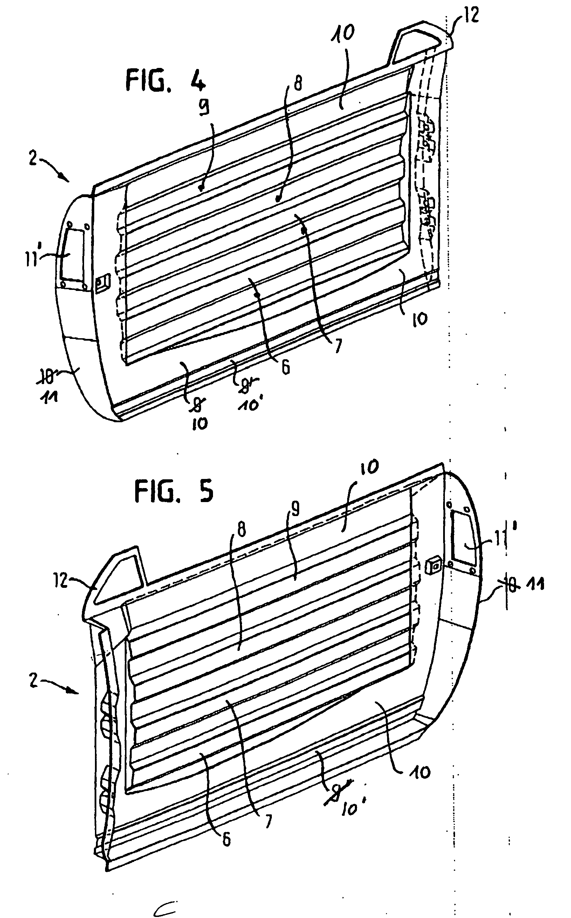

Die beiden von Fahrzeug aus gesehen jeweils nach außen gekrümmten Schalenkörper 1 und 2 können aus tiefgezogenen Alu- oder Stahlblechen bestehen. Der innere Schalenkörper 2 besitzt im mittleren Bereich eine Längsversteifung aus parallelen waagerechten Rippen 6, 7 8 und 9 (Fig. 5),, die an einen allseitig geschlossenen Rahmen 10 des Schalenkörpers 2 anschließen, der an seinem vorderen Ende einen rechtwinklig nach außen abgewinkelten, Stirnfläche 11 aufweist, deren freier äußerer Rand entsprechend der Krümmung der Fahrzeugtür gekrümmt ausgebildet ist, welcher zur Aufnahme des hier nicht gezeigten Türschlosses eine Öffnung 11' aufweist. Der geschlossene Rahmen 10 des inneren Schalenkörpers 2 besitzt an seinem rückwärtigen Ende ein vorspringendes Schamieranschlußprofil 12 zum Anschluß an das hier nicht gezeigte Scharnier der Tür.

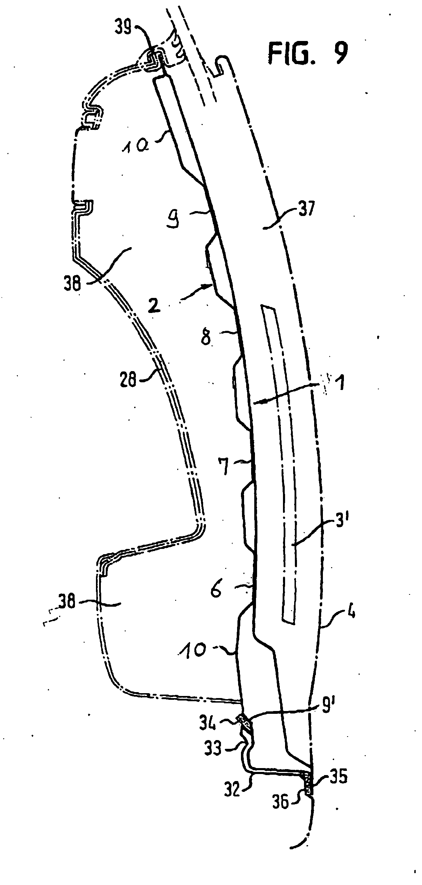

Der Rahmen 10 des gekrümmten inneren Schalenkörpers 2 besitzt im Bodenbereich ein durchgehendes Bodenlängsprofil 10', das der Versteifung eines am freien nach oben L-förrnig abgewinkelten, hier nicht gezeigten Fahrzeugbodenlängsträgers 32 (Fig. 9) angepaßt ist, auf dem sich der zweischalige Funktionsträger 3 der Fahrzeugtür 5 abstützt.

Der äußere gekrümmte Schalenkörper 1 besitzt Querversteifungen aus parallelen senkrechten Rippen 13 bis 22, die ihrerseits an einen ebenfalls allseitig geschlossenen Rahmen 23 anschließen, der an seinem vorderen Ende ein vergleichsweise zur Stirnfläche 11 am vorderen Ende des inneren Schalenkörpers 2 schmales Anschlußprofil 24 und an seinem rückwärtigen Ende ein vorspringendes Schamieranschlußprofil 25 aufweist, das dem Schamieranschlußprofil 12 am rückwärtigen Ende des entsprechend gekrümmten inneren Schalenkörpers 2 zur Versteifung räumlich angepaßt ist und die gemeinsam ein verstärktes Anschlußprofil für das hier nicht gezeigte Türscharnier bilden.

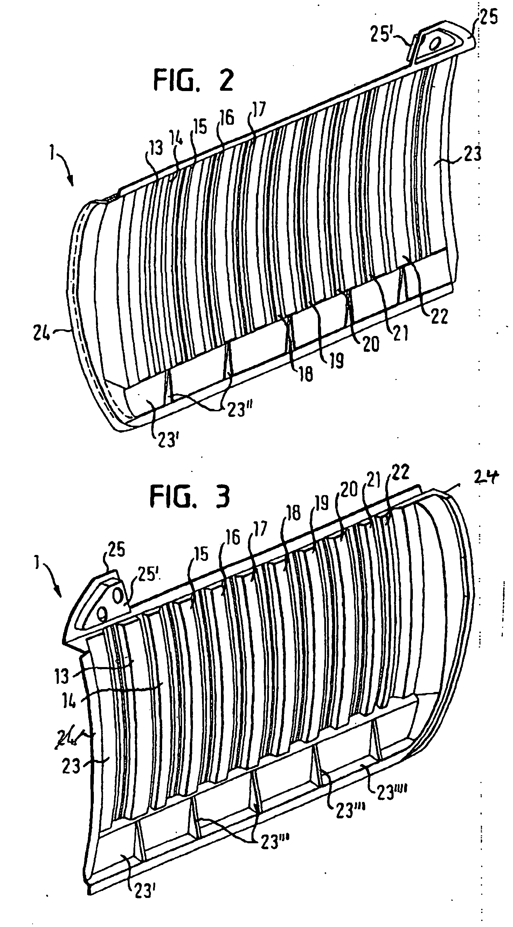

Die senkrechten Versteifungen 13 bis 22 des äußeren Schalenkörpers 1 enden mit Abstand von seinem unteren Bodenrand, so daß bodenseitig ein verbreiteter Rahmenabschnitt 23' gebildet ist, der innen- und außenseitig jeweils durch vertikale Bodenstege 23" und 23"' (Fig. 2 und 3) weiter versteift ist, die in Längsrichtung über den Bodenrand gleichmäßig verteilt sind und sich innen- und außenseitig paarweise gegenüberliegen. Die Bodenstege schließen innen- und außenseitig mit verbreiterten Abschnitten an eine verbreiterte horizontale Bodenfläche 23"" an.

Die beiden Rahmen 10 und 23 der beiden Schalenkörper 2 und 1 sind zueinander so gestaltet, daß ihre äußeren Randabschnitte sich gegenseitig übergreifen, um gemeinsam einen allseitig geschlossenen, gegen Zutritt von Wasser dichten Rahmen für den sandwichartig aufgebauten, zweiteiligen, durch Längs- und Querversteifungen stabilisierten Funktionsträger 3 der Fahrzeugtür 5 zu bilden, der entsprechend der Krümmung der Fahrzeugtür gekrümmt ausgebildet ist.

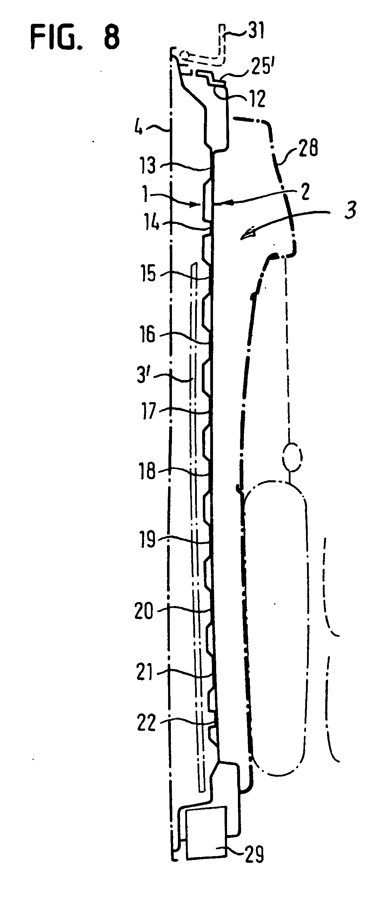

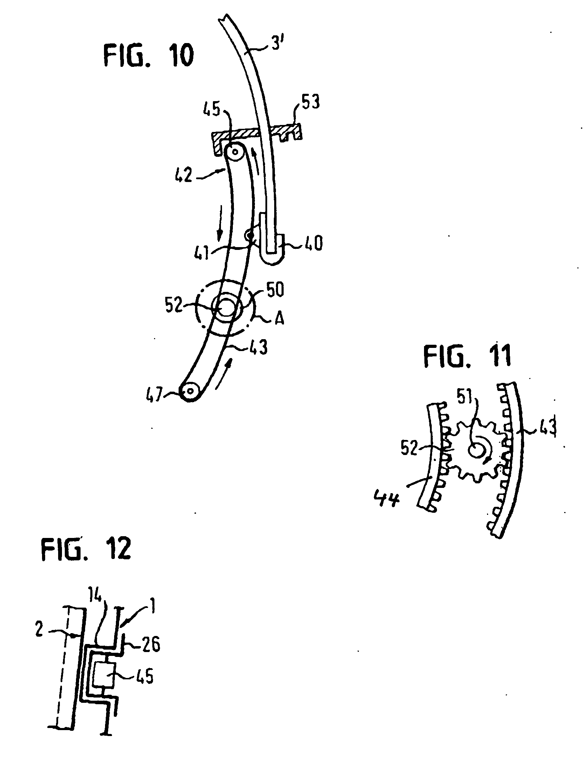

Die senkrechten Versteifungen 13 bis 22 des äußeren Schalenkörpers 1 enthalten zwei parallele Quernuten 14 und 22 (Fig. 8), in der die u-förmigen Fensterführungsschienen 26 und 27 (Fig. 1) zur Verschiebung der gekrümmten Fensterscheibe 3' mit Spiel eingreifen (Fig. 12), wie nachstehend mehr im einzelnen beschrieben ist.

Der gekrümmte äußere Schalenkörper 1 ist außenseitig im äußeren Randbereich so profiliert, daß die entsprechend gekrümmte Türaußenverkleidung 4 (Fig. 1) mit vergleichsweise geringem Abstand an den äußeren Randbereich des äußeren Schalenkörpers 1 anschließbar ist. Der dadurch geschaffene schachtförmige Montageraum 37 (Fig*.* 9) zum Einsetzen der vormontierten, entsprechend der Fensterkrümmung gekrümmt ausgebildeten Fensterhebe- und -senkvorrichtung von oben in den Montageraum 37 kann vorteilhafterweise besonders schmal ausgebildet werden, der ebenfalls entsprechend gekrümmt ausgebildet ist. Um so mehr Raum steht damit vorteilhafterweise der Türinnenverkleidung 28 (Fig. 8) zur Verfügung, wie nachstehend anhand der Fig. 10 bis 13 näher verdeutlicht ist.

In Fig. 2 ist die perspektivische Innenansicht des gekrümmten äußeren Schalenkörpers 1 gezeigt, die in Fig. 3 der perspektivischen Außenansicht des Schalenkörpers 1 gegenübergestellt ist. Das Scharnieranschlußprofil 25 am rückseitigen Ende des äußeren Schalenkörpers 1 trägt eine Profilversteifung 25' zum Anschluß an das hier nicht gezeigte Scharnier.

In Fig. 4 ist hingegen die perspektivische Innenansicht des entsprechend gekrümmten inneren Schalenkörpers 2 gezeigt, die in Fig. 5 der perspektivischen Außenansicht des Schalenkörpers 2 gegenübergestellt ist.

Die Fig. 2 und 3 bzw. 4 und 5 zeigen, daß die beiden Schalenkörper 1 und 2 jeweils außen- und innenseitig sich kreuzende parallele Längs- und Querversteifungen aufweisen, die beispielsweise hier als Rippenstrukturen ausgebildet sind. Grundsätzlich sind jedoch auch andere gleich wirkende Versteifungen möglich, die rechte Winkel an den Kreuzungspunkten bilden.

Fig. 1 verdeutlicht, daß die beiden Schalenkörper 1 und 2 sandwichartig aneinandergesetzt werden, um den doppelschaligen gekrümmten Funktionsträger 3 zu bilden. Dabei bilden die äußeren waagerechten Versteifungen 6, 7, 8, 9, des inneren Schalenkörpers 2 (Fig. 5) und die inneren senkrechten Versteifungen des äußeren Schalenkörpers Kreuzungspunkte, an denen sich die beiderseitigen einander zugewandte Rippenprofile berühren.

An sämtlichen oder besonders ausgewählten Kreuzungspunkten sind die beiden Schalenkörper 1 und 2 miteinander verschweißt (vorzugsweise punktverschweißt) oder verklebt oder vernietet oder geclincht, um auf diese Weise beide Schalenkörper 1 und 2 zur Bildung des Funktionsträgers 3 fest miteinander zu verbinden, der entsprechend der gekrümmten Fahrzeugtür und der seitlichen Fensterscheibe 3' gekrümmt ausgebildet ist.

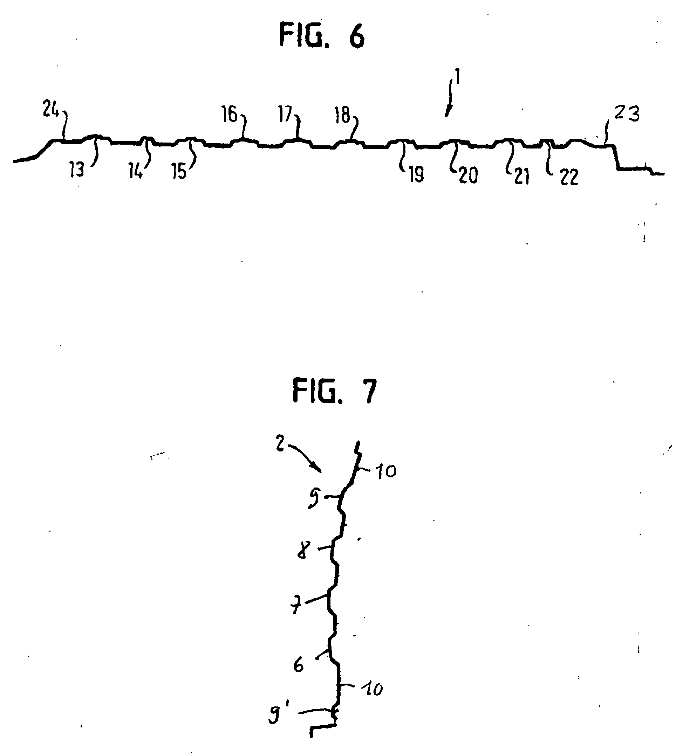

Fig. 6 zeigt einen horizontalen Schnitt durch den äußeren, rippenförmig strukturierten Schalenkörper 1 und Fig. 7 zeigt einen vertikalen Schnitt durch den inneren ebenfalls rippenförmig strukturierten Schalenkörper 2.

Figur 8 zeigt einen horizontalen Schnitt durch die nach außen gekrümmte Fahrzeugtür 5 mit der strichpunktiert angedeuteten Türaußenverkleidung 4, der strichpunktiert angedeuteten Fensterscheibe 3' und dem sandwichartig aus dem äußeren und dem inneren Schalenkörper 1 und 2 aufgebauten Funktionsträger 3, wobei am inneren Schalenkörper 2 eine strichpunktiert angedeutete Türinnenverkleidung 28 in einer beispielsweisen Gestaltung gehalten ist, die in Fig. 8 nur angedeutet ist.

In Fig. 8 ist das Türschloß mit 29 bezeichnet, das in die Ausnehmung 11' an der vorderen Stirnfläche 11 des inneren Schalenkörpers 2 (Fig. 4 und 5) eingesetzt ist und rückseitig an einen Profilabschnitt des äußeren Schalenkörpers 1 (Fig. 1 und 2) angrenzt. Das Türschloß 29 dient damit der zusätzlichen Versteifung der beiden Schalenkörper 1 und 2 im Bereich der vorderen Stirnfläche der Fahrzeugtür 5.

Das rückseitige Türende mit den Scharnieranschlußprofilen 12 und 25 und der Profilversteifung 25' an den Schalenkörpern 1 und 2 ist an ein gestrichelt angedeutetes Scharnier 31 in herkömmlicher Weise angeschraubt.

Fig. 9 zeigt einen vertikalen Schnitt durch die nach außen gekrümmte Fahrzeugtür 5 nach der Erfindung mit den beiden Schalenkörpern 1 und 2, der entsprechend gekrümmten seitlichen Fensterscheibe 3' der gestrichelt angedeuteten Türaußenverkleidung 4 und der Türinnenverkleidung 28. Der bodenseitige L-förmige Längsträger der Fahrzeugtür ist mit 32 bezeichnet, dessen Versteifung 33 am inneren oberen Ende in das nutenförmige Längsprofil 9' am Boden des Rahmens 10 des Schalenkörpers 2 (Fig. 4 und 5) eingreift. In den freien Spalt zwischen dem Ende der Versteifung 33 des Längsträgers 32 und dem nutenförmigen Bodenlängsprofil 10' ist ein erster Dichtungsstreifen 34 eingesetzt. Ein weiterer Dichtungsstreifen 35 befindet sich zwischen dem äußeren, nach unten abgebogenen Ende 36 des Längsträgers 32 und der sich an seinem abgebogenen Ende 36 abstützenden Türaußenverkleidung 4. Wasser kann somit von außen allenfalls in den Bauraum 37 zwischen der Türaußenverkleidung 4 und dem äußeren Schalenkörper 1, jedoch nicht in den Bereich der Türinnenverkleidung 28 und nicht in den Raum zwischen den beiden Schalenkörpern 1 und 2 eindringen, die an ihren äußeren Rändern jeweils einen umlaufenden, dicht geschlossenen Rahmen 10, 23 bilden, wobei der schachtförmige Montageraum 37 zum Einsetzen der fertig montierten Fensterhebe- und -senkvorrichtung in Verbindung mit der Fensterscheibe und der oberen Schachtabdeckung 53 (Fig. 10) vergleichsweise zum Stand der Technik besonders schmal ausgebildet werden kann. Deswegen kann der von Feuchtigkeit vollkommen geschützte Raum 38 zwischen dem inneren Schalenkörper 2 und der Türinnenverkleidung 28 auch vorteilhafterweise vergleichsweise groß gestaltet werden, was zu einem wesentlichen Platzgewinn für den Fahrgastraum führt.

Die Türinnenverkleidung 28 besitzt an ihrem oberen Ende einen Rand 39, der das obere Ende des Rahmens des Funktionsträgers 3 aus den beiden Schalenkörper 1 und 2 übergreift, so daß vorteilhafterweise keine beim Stand der Technik sonst notwendige Einhängeleiste für die Türinnenverkleidung 28 notwendig ist.

Der vergleichsweise große freie Raum 38 zwischen dem inneren Schaltkörper 2 und der Türverkleidung 28 kann vorteilhafterweise als Stauraum, z.B. Kartentasche, etc. und/oder zur Aufnahme von stoßenergieabsorbierenden Materialien (z.B. PUR) für einen Crashfall dienen.

Im Crashfall weist die erfindungsgemäße Fahrzeugtür 5 mit ihrem doppelschaligen Funktionsträger 3 eine besonders hohe Stabilität auf. Der Funktionsträger 3 mit seinem durchgängig geschlossenen Randbereich aus den beiden punktverschweißten Schalenkörpern 1 und 2, die tiefgezogene Längs- und Querversteifungen besitzen, weist besonders hohe Festigkeitswerte in allen Lastfällen auf und kann erforderlichenfalls durch zusätzliche Trägerprofile leicht weiter stabilisiert werden.

Der randseitig geschlossene doppelschalige Funktionsträger 3 erlaubt dabei kein Eindringen von Wasser in den Bereich der inneren Türverkleidung 28. Wenn der Fensterhebemotor z.B. an der Innenseite des inneren Schalenkörpers 2 gehalten ist, kann seine Antriebswelle in den Montageraum 37 leicht vollständig wasserdicht abgedichtet werden.

Die Türinnenverkleidung 28 läßt sich besonders einfach an dem Funktionsträger 3, z.B. an dessen oberen Rand, befestigen.

Die Montage der Anbauteile am Funktionsträger gestaltet sich besonders einfach. Das Türschloß 29 und die Fensterheber- und -senkvorrichtung 42 etc. lassen sich vollrobotisch vormontieren, so daß der Funktionsträger 3 mit den vormontierten Anbauteilen dem Montageraum 37 (Fig. 9) zugeführt werden kann. Der schachtigartige Montageraum 37 der Fahrzeugtür 5 zwischen seiner Türaußenverkleidung 4 und der Außenseite des Funktionsträgers 3 kann vorteilhafterweise besonders schmal gehalten werden, da für den Fensterhebe- und -senkbetrieb kein ungekrümmter Schachtabschnitt mehr benötigt wird.

Dies ist erst möglich, da eine Fensterhebe- und -senkvorrichtung 42 zur Anwendung kommt, die einen gekrümmten Aufbau entsprechend der Krümmung der Fahrzeugtür 5 und der Fensterscheibe 3' aufweist, wie nachstehend anhand der Fig. 10 bis 12 für ein schematisches Ausführungsbeispiel nur prinzipiell gezeigt ist.

Die der gekrümmten Struktur des Funktionsträgers angepaßte gekrümmte Struktur der Fensterhebe- und -senkvorrichtung 42 ist im Vertikalschnitt in Fig. 10 verdeutlicht. Hier ist von der gekrümmten Fensterscheibe 3' nur das untere Ende dargestellt, das in eine waagerechte u-förmige Halteschiene 40 eingreift, die über ein Verbindungsteil 41 an die Fensterhebe- und -senkvorrichtung 42 angeschlossen ist.

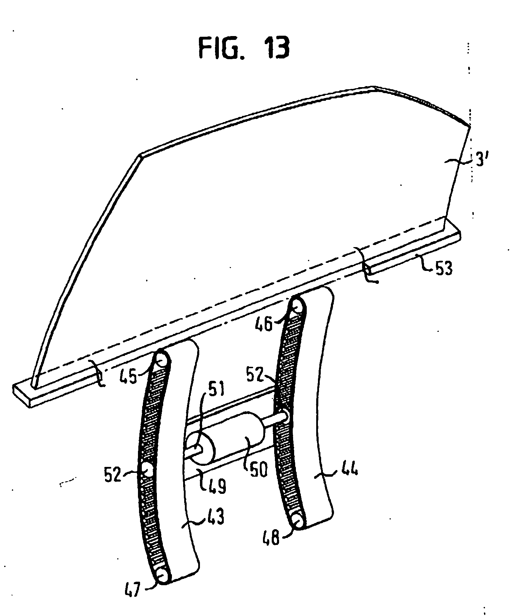

Die Fensterhebe- und -senkvorrichtung 42 besteht aus zwei Zahnriemen 43, 44, die über obere und untere Umlenkrollen 45, 46 und 47, 48 in den gekrümmten parallelen Führungsschienen 26, 27 laufen (Fig. 1), die einen gewählten Abstand voneinander haben und in parallele äußere Profilnuten 14 und 22 (Fig. 8) eingesetzt sind, von der in Fig. 12 im Horizontalschnitt lediglich die äußere Nut 14 gezeigt ist. Der relativ weite Abstand der Nuten 14 und 22 zur Aufnahme der Führungsschienen gemäß Fig. 8 kann auch wesentlich kürzer gewählt sein, wie es Fig. 13 verdeutlicht.

An der u-förmigen Halteschiene 40 (Fig. 10) zur Aufnahme des unteren Fensterrandes 3' sind jeweils gleichartige Verbindungsteile 41 vorhanden, über die die Halteschiene 40 an die parallelen Zahnriemen 43, 44 fest angeschlossen ist. Die parallelen Zahnriemen 43, 44 sind durch eine Halterung 49 (Fig. 13), z.B. in der Gestalt eines Bleches, parallel zur Halteschiene 40 fest verbunden.

Die Halterung 49 dient zur Befestigung eines Antriebsmotors 50 mit einer Motorwelle 51, die an ihren beidseitigen Enden je ein Ritzel 52 zum Antrieb der beiden Zahnriemen tragen, wobei die Ritzel 52 jeweils innerhalb der über die oberen und unteren Umlenkrollen 45, 46 und 47, 48 geführten Zahnriemen 43 und 44 liegen und jeweils mit ihren Zähnen in die gegenüberliegenden Nuten der Zahnriemen 43 und 44 eingreifen.

Zum Heben und Senken der gekrümmten Fensterscheibe 3' in der Halteschiene 40 werden die beiden Zahnriemen 43 und 44 über die beiden Ritzeln 52 synchron angetrieben, von denen das eine Ritzel 52 innerhalb eines Zahnriemenabschnittes in Fig. 11 gegenüber Fig. 10 vergrößert dargestellt ist. Beim Heben und Senken der Fensterscheibe 3' laufen die Zahnriemen jeweils auf dem Boden der Führungsschienen, die rechteckige Querschnitte aufweisen. Die beiden parallelen Führungsschienen 26 und 27 sind an ihren oberen Enden an einen Abdeckrahmen 53 mit einem abgedichteten Schlitz für die Fensterscheibe 3' fest angeschlossen, der zur dichten Abdeckung des Montageschachtes 37 (Fig. 9) zwischen der Außenhaut 4 der Fahrzeugtür 5 und dem im Beispielsfalle zweischaligen Funktionsträger 3 dient.

Zur Montage der Fensterhebe- und -senkvorrichtung 42 werden die beiden Führungsschienen 26, 27 mit den integrierten Zahnriemen 43 und 44 und seinen in den Führungsschienen drehbar gelagerten oberen und unteren Umlenkrollen 45, 46 und 47, 48 fertig vormontiert und als Baueinheit an die u-förmige Halteschiene 40 für die Fensterscheibe 3' angeschlossen. Außerdem sind die oberen Enden der Führungsschienen 26, 27 an den Abdeckrahmen 53 fest angeschlossen, und zwischen den Führungsschienen 26, 27 ist eine Halterung 49 für den Motor 50 fest angebracht, deren beide von Motor 50 angetriebenen Ritzel 52 in die parallelen Zahnriemen 43, 44 eingreifen.

Die gesamte vormontierte Baueinheit aus Abdeckrahmen 53, Führungsschienen 26, 27 mit den integrierten Zahnriemen 43, 44 und den Umlenkrollen 45, 46 und 47, 48, der Halterung für den Motor 50 und der Halteschiene 40 für die Fensterscheibe 3' wird als ganzes in den Montageschacht 37 von oben eingesetzt, wobei die Führungsschienen 26, 27 in den ausgewählten Profilnuten 14 und 22 an der Außenseite des Funktionsträgers zu liegen kommen und mit diesen fest verbunden werden. Dabei greifen die Führungsschienen 26, 27 jeweils mit ausreichendem Spiel in die Profilnuten 14, 22 vor einer Befestigung ein, um eine Justierung vornehmen zu können.

Es ist klar, daß der Motor 50 auch an der Innenseite des Funktionsträgers 3 montiert sein kann wobei die durch den Funktionsträger wasserdicht hindurchgeführte Antriebswelle des Motors über ein von der Halterung 49 getragenes, nicht dargestelltes Getriebe die beiden Ritzel 52 synchron antriebt.

Die Erfindung ist nicht auf das Ausführungsbeispiel beschränkt, das dem Fachmann eine Vielzahl von gleichwirkenden Abwandlungen nahelegt, die sämtlich im Rahmen der vorliegenden Erfindung liegen.

So kann der entsprechend der gekrümmten Gestalt der Fahrzeugtür und dem Seitenfenster 3' gekrümmte Funktionsträger 3 auch aus Kunststoff bestehen, der in mindestens zwei parallelen Ebenen zur Versteifung sich kreuzende Faserstrukturen aufweist. Hierzu kann er auch aus mindestens zwei sandwichartig aneinanderliegenden Kunststoffschalen bestehen, die zu einer Einheit fest miteinander verbunden sind, wobei die parallelen Faserverstärkungen in der einen Kunststoffschale quer zur parallelen Faserverstärkung in der benachbarten Kunststoffschale verlaufen.

Zusätzlich können die Kunststoffschalen im vorstehenden Sinne durch räumliche Profile bildende Versteifungen zusätzlich stabilisiert sein. Dabei sind die türaußenseitigen Profile jeweils so gestaltet, daß die Fensterhebe- und -senkvorrichtung wenigstens in einen Teil des Profils integriert werden kann, wobei Fensterhebe- und -senkvorrichtung der gekrümmten Struktur des Funktionsträgers platzsparend genau angepaßt ist.

## Patentansprüche

1. Gekrümmt ausgebildete Fahrzeugtür (5) mit einer entsprechend gekrümmt ausgebileten seitlichen Fensterscheibe (3'), die mittels einer Fensterhebe- und -senkvorrichtung (42) geöffnet und geschlossen werden kann, und mit einem Funktionsträger (3), an dem Anbauteile einschließlich der Fensterhebe- und -senkvorrichtung (42) und den Führungen (26,27) für die Fensterscheibe (3'), und die äußere (4) und die innere Türverkleidung (28) gehalten sind, wobei, zwischen der Außenseite des Funktionsträgers (3) und der Innenseite der äußeren Türverkleidung (4) ein freier Raum (37) für die Fensterhebe- und-senkvorrichtung gebildet ist, **dadurch gekennzeichnet, dass** der freie Raum (37) als schachtförmiger Montageraum für die Fensterhebe- und Fenstersenkvorrichtung (42) ausgebildet ist und dass der Funktionsträger (3) an seiner entsprechend der Fahrzeugtür (5) gekrümmten Außenseite mit Abstand voneinander parallel verlaufende senkrechte Versteifungen(13-22) aufweist, die senkrechte Nuten (14, 22) zur Aufnahme der entsprechend gekrümmt ausgebildeten Fensterhebe- und -senkvörrichtung (42) enthalten.

2. Fahrzuegtür nach Anspruch 1,
**dadurch gekennzeichnet**
• **dass** der entsprechend der Fahrzeugtür (5) gekrümmt ausgebildete Funktionsträger (3) aus wenigstens zwei Schalenkörpern (1) und (2) besteht,
• **dass** die beiden gekrümmten Schalenkörper (1) und (2) jeweils Versteifungen (13 bis 22; bzw. 6 bis 9) aufweisen,
• **dass** die Versteifungen (13 bis 22) des äußeren Schalenkörpers (1) und die Versteifungen (6 bis 9) des inneren Schalenkörpers (2) sich an ihren benachbart liegenden Innenflächen kreuzen,
• **dass** die beiden Schalenkörper (1) und (2) wenigstens an ausgewählten Kreuzungspunkten miteinander fest verbunden sind,
• **dass** die Schalenkörper (1) und (2) sandwichartig an ihren geschlossenen umlaufenden Rändern zur Bildung eines nach innen wasserdichten Funktionsträgers fest und wasserdicht mit einander verbunden sind.

3. Fahrzeugtür nach Anspruch 2,
**dadurch gekennzeichnet, dass** die Versteifungen (13-22) der Schalenkörper (1,2) jeweils von parallel verlaufenden Profilen gebildet sind, und dass die Versteifungen des einen Schalenkörpers mit den Versteifungen des anderen Schalenkörpers and den jeweiligen Kreuzungspunkten einen Winkel von 90° bilden.

4. Fahrzeugtür nach Anspruch 3,
**dadurch gekennzeichnet, dass** die parallelen Versteifungen (13-22) des äußeren Schalenkörpers (1) senkrecht und die parallelen Versteifungen (6-9) des inneren Schalenkörpers (2) waagrecht verlaufen.

5. Fahrzeugtür nach Anspruch 2,
**dadurch gekennzeichnet, dass** die Schalenkörper (1) und (2) an Kreuzungspunkten von Versteifungen geschweißt, geklebt, genietet oder geclincht ist.

6. Fahrzeugtür nach Anspruch 2,
**dadurch gekennzeichnet, dass** die beiden Schalenkörper (1,2) jeweils aus Aluminiumblech oder Stahlblech oder aus Kunststoff geformt sind.

7. Fahrzeugtür nach Anspruch 2,
**dadurch gekennzeichnet, dass** die von einem Abschnitt des Rahmens (10) des inneren Schalenkörpers (2) gebildete vordere türverschlußsseitige Stirnfläche (11) eine Ausnehmung (11') für eine Türschloßeinheit aufweist.

8. Fahrzeugtür nach Anspruch 2,
**dadurch gekennzeichnet, dass** die hinteren türscharnierseitigen Abschnitte der Ränder der beiden Schalenkörper (1,2) jeweils nach außen vorspringene Profile (12) und (25) aufweisen, die gemeinsam den Anschluß an das Türscharnier (31) bilden.

9. Fahrzeugtür nach Anspruch 1,
**dadurch gekennzeichnet, dass** die äußere Türverkleidung (4) an der Außenseite des Funktionsträgers (3) festgehalten ist und dass die innere Türverkleidung (28) an der Innenseite des Funktionsträgers (3) festgehalten ist, wobei der freie Raum zwischen der äusseren Türverkleidung (4) und dem Funktionsträger (3) den genannten Montageraum (37) zur Aufnahme der Fensterhebe- und -senkvorrichtung (42) bildet, die der Krümmung der Fahrzeugtür angepaßt ausgebildet ist.

10. Fahrzeugtür nach Anspruch 1,
**dadurch gekennzeichnet, dass** der freie schachtförmige Montageraum (37) zwischen der äusseren Türverkleidung (4) und dem Funktionsträger (3) und/oder der freie Zwischenraum zwischen der inneren Türverkleidung (28) und dem inneren Schalenkörper (2) mit Füllmaterial angefüllt ist, das ausgewählte Eigenschaften für den Insassenschutz aufweist.

11. Fahrzeugtür nach Anspruch 1,
**dadurch gekennzeichnet, dass** die der Krümmung der Fahrzeugtür angepaßt ausgebildete Fensterhebe- und -senkvorrichtung (42) wenigstens zwei Riemen (43, 44) oder dergleichen Seilzüge umfaßt, die zur Anpassung an die Krümmung der Fahrzeugtür (3) jeweils über obere und untere Umlenkrollen (45 bis 48) in gekrümmten Führungsschienen geführt sind, die der Krümmung des Funktionsträgers (3) angepaßt sind, der außenseitig zur Aufnahme der Führungsschienen Nuten (14, 22') aufweist, wobei die Riemen (43,44) zur Auf- und/oder Abbewegung des Fensters (3') mit synchron angetriebenen Fördermitteln in Verbindung stehen.

12. Fahrzeugtür nach Anspruch 11,
**dadurch gekennzeichnet, dass** die der Türkrümmung angepaßte Fensterhebe- und -senkvorrichtung (42) eine von oben in den offenen Montageschacht (37) zwischen der Fahräußenverkleidung (4) und dem Funktionsträger (3) einsetzbar ausgebildete Baueinheit ist, die im eingesetzten Zustand die Öffnung des schachtförmigen Montageraumes (37) mit einer Abdeckung (53) abschließt.

## Claims

1. Curved vehicle door (5) having a correspondingly curved side window (3') which can be opened and closed by means of a window lifting and lowering device (42), and having a functional carrier (3) on which add-on parts including the window lifting and lowering device (42) and the guides (26, 27) for the window (3') and the outer (4) and the inner door cladding (28) are retained, a free space (37) for the window lifting and lowering device being formed between the outside of the functional carrier (3) and the inside of the outer door cladding (4), **characterised in that** the free space (37) is configured as a shaft-shaped mounting space for the window lifting and window lowering device (42) and **in that** the functional carrier (3), on the outside thereof which is curved corresponding to the vehicle door (5), has vertical reinforcements (13 - 22) which extend parallel to and at a spacing from each other and contain vertical grooves (14, 22) for receiving the correspondingly curved window lifting and lowering device (42).

2. Vehicle door according to claim 1,
**characterised in that**
• the functional carrier (3) which is curved corresponding to the vehicle door (5) comprises at least two shell bodies (1) and (2),
• **in that** the two curved shell bodies (1) and (2) respectively have reinforcements (13 to 22; or 6 to 9),
• **in that** the reinforcement (13 to 22) of the outer shell body (1) and the reinforcements (6 to 9) of the inner shell body (2) intersect at the adjacently situated inner surfaces thereof,
• **in that** the two shell bodies (1) and (2) are connected securely to each other at least at selected intersection points,
• **in that** the shell bodies (1) and (2) are connected to each other in a secure and water-tight manner in the form of a sandwich at the closed circumferential edges thereof in order to form a functional carrier which is water-tight towards the interior.

3. Vehicle door according to claim 2,
**characterised in that** the reinforcements (13 - 22) of the shell bodies (1, 2) respectively are formed by parallel-extending profiles, and **in that** the reinforcements of the one shell body with the reinforcements of the other shell body form an angle of 90° at the respective intersection points.

4. Vehicle door according to claim 3,
**characterised in that** the parallel reinforcements (13 - 22) of the outer shell body (1) extend vertically and the parallel reinforcements (6 - 9) of the inner shell body (2) extend horizontally.

5. Vehicle door according to claim 2,
**characterised in that** the shell bodies (1) and (2) are welded, glued, riveted or clinched at intersection points of reinforcements.

6. Vehicle door according to claim 2,
**characterised in that** the two shell bodies (1, 2) respectively are formed from aluminium sheet or steel sheet or from plastic material.

7. Vehicle door according to claim 2,
**characterised in that** the front door lock-side end face (11), which is formed by a portion of the frame (10) of the inner shell body (2), has a recess (11') for a door lock unit.

8. Vehicle door according to claim 2,
**characterised in that** the rear door hinge-side portions of the edges of the two shell bodies (1, 2) respectively have outwardly projecting profiles (12) and (25) which together form the connection to the door hinge (31).

9. Vehicle door according to claim 1,
**characterised in that** the outer door cladding (4) is fixed on the outside of the functional carrier (3) and **in that** the inner door cladding (28) is fixed on the inside of the functional carrier (3), the free space between the outer door cladding (4) and the functional carrier (3) forming the mentioned mounting space (37) for receiving the window lifting and lowering device (42) which is configured adapted to the curvature of the vehicle door.

10. Vehicle door according to claim 1,
**characterised in that** the free shaft-shaped mounting space (37) between the outer door cladding (4) and the functional carrier (3) and/or the free gap between the inner door cladding (28) and the inner shell body (2) is filled with filling material which has selected properties for protection of the passengers.

11. Vehicle door according to claim 1,
**characterised in that** the window lifting and lowering device (42) which is configured adapted to the curvature of the vehicle door includes at least two belts (43, 44) or similar sheathed cables which, for adapting to the curvature of the vehicle door (3), are guided respectively via upper and lower deflection rollers (45 to 48) in curved guide rails which are adapted to the curvature of the functional carrier (3) which has grooves (14, 22) on the outside for receiving the guide rails, the belts (43, 44) for moving the window (3') up and down being in communication with synchronously driven conveying means.

12. Vehicle door according to claim 11,
**characterised in that** the window lifting and lowering device (42) which is adapted to the curvature of the door is a constructional unit which is configured to be insertable from above into the open mounting shaft (37) between the vehicle outer cladding (4) and the functional carrier (3), said constructional unit sealing the opening of the shaft-shaped mounting space (37) with a cover (53) in the inserted state.

## Revendications

1. Portière de véhicule (5) réalisée de manière courbe avec une vitre (3') latérale, réalisée de manière courbe en conséquence qui peut être ouverte et fermée au moyen d'un dispositif de levage et d'abaissement de la vitre (42), et avec un support fonctionnel (3), sur lequel sont maintenus des pièces de montage, y compris du dispositif de levage et d'abaissement de la vitre (42) et des guidages (26, 27) pour la vitre (3'), et la garniture de portière (28) extérieure et intérieure, un espace libre (37) pour le dispositif de levage et d'abaissement de la vitre étant formé entre le côté extérieur du support fonctionnel (3) et le côté intérieur de la garniture de portière (4) extérieure, **caractérisée en ce que** l'espace libre (37) est réalisé comme un espace de montage en forme de puits pour le dispositif de levage et d'abaissement de la vitre (42) et **en ce que** le support fonctionnel (3) présente sur son côté extérieur courbe selon la portière de véhicule (5), des renforcements (13-22) verticaux, s'étendant à distance parallèlement les uns aux autres qui contiennent des rainures verticales (14, 22) pour la réception du dispositif de levage et d'abaissement de la vitre (42) réalisé de manière courbe en conséquence.

2. Portière de véhicule selon la revendication 1,
**caractérisée en ce que**
- le support fonctionnel (3) réalisé de manière courbe selon la portière de véhicule (5) se compose d'au moins deux corps en forme de coque (1) et (2),
- les deux corps en forme de coque (1) et (2) courbes présentent chacun des renforcements (13 à 22 ; ou 6 à 9),
- les renforcements (13 à 22) du corps en forme de coque (1) extérieur et les renforcements (6 à 9) du corps en forme de coque (2) intérieur se croisent sur des surfaces internes contiguës,
- les deux corps en forme de coque (1) et (2) sont reliés fixement l'un à l'autre au moins au niveau de points d'intersection sélectionnés,
- les corps en forme de coque (1) et (2) sont reliés fixement et de manière étanche à l'eau l'un à l'autre comme un sandwich sur leurs bords périphériques fermés pour former un support fonctionnel étanche à l'eau vers l'intérieur.

3. Portière de véhicule selon la revendication 2,
**caractérisée en ce que** les renforcements (13-22) des corps en forme de coque (1, 2) sont formés chacun par des profilés s'étendant parallèlement et **en ce que** les renforcements d'un corps en forme de coque forment avec les renforcements de l'autre corps en forme de coque au niveau des points d'intersection respectifs, un angle de 90 °.

4. Portière de véhicule selon la revendication 3,
**caractérisée en ce que** les renforcements (13-22) parallèles du corps en forme de coque (1) extérieur s'étendent verticalement et les renforcements (6-9) parallèles du corps en forme de coque (2) intérieur s'étendent horizontalement.

5. Portière de véhicule selon la revendication 2,
**caractérisée en ce que** les corps en forme de coque (1) et (2) sont soudés, collés, rivetés ou engorgés au niveau des points d'intersection des renforcements.

6. Portière de véhicule selon la revendication 2,
**caractérisée en ce que** les deux corps en forme de coque (1, 2) sont constitués chacun de tôle d'aluminium ou de tôle d'acier ou de matière plastique.

7. Portière de véhicule selon la revendication 2,
**caractérisée en ce que** la surface frontale (11) avant, côté fermeture de portière, formée par une section du cadre (10) du corps en forme de coque (2) intérieur présente un évidement (11') pour une unité de serrure de portière.

8. Portière de véhicule selon la revendication 2,
**caractérisée en ce que** les sections arrière, côté charnière de portière des bords des deux corps en forme de coque (1, 2) présentent chacune des profilés (12) et (25) en saillie vers l'extérieur, qui forment ensemble le raccordement à la charnière de portière (31).

9. Portière de véhicule selon la revendication 1,
**caractérisée en ce que** la garniture de portière (4) extérieure est maintenue sur le côté extérieur du support fonctionnel (3) et **en ce que** la garniture de portière (28) intérieure est maintenue sur le côté intérieur du support fonctionnel (3), l'espace libre entre la garniture de portière (4) extérieure et le support fonctionnel (3) formant l'espace de montage (37) cité pour la réception du dispositif de levage et d'abaissement de la vitre (42), qui est réalisé de manière adaptée à la courbure de la portière de véhicule.

10. Portière de véhicule selon la revendication 1,
**caractérisée en ce que** l'espace de montage (37) libre en forme de puits entre la garniture de portière (4) extérieure et le support fonctionnel (3) et/ou l'espace intermédiaire libre entre la garniture de portière (28) intérieure et le corps en forme de coque (2) intérieur est rempli de matière de remplissage qui présente des propriétés sélectionnées pour la protection des occupants du véhicule.

11. Portière de véhicule selon la revendication 1,
**caractérisée en ce que** le dispositif de levage et d'abaissement de la vitre (42) réalisé de manière adaptée à la courbure de la portière de véhicule comporte au moins deux courroies (43, 44) ou câbles Bowden similaires qui sont guidés pour l'adaptation à la courbure de la portière de véhicule (3) respectivement sur des poulies de renvoi (45 à 48) supérieures et inférieures dans des rails de guidage courbes qui sont adaptés à la courbure du support fonctionnel (3) qui présente côté extérieur des rainures (14, 22) pour la réception des rails de guidage, les courroies (43, 44) étant en liaison avec des moyens de transport entraînés de manière synchrone pour le levage et/ou l'abaissement de la vitre (3').

12. Portière de véhicule selon la revendication 11,
**caractérisée en ce que** le dispositif de levage et d'abaissement du véhicule (42) adapté à la courbure de la portière est une unité de construction réalisée de manière insérable par le haut dans le puits de montage (37) ouvert entre la garniture extérieure de la portière (4) et le support fonctionnel (3), laquelle obture à l'état inséré l'ouverture de l'espace de montage (37) en forme de puits avec un élément de recouvrement (53).
